# EUROPEAN PATENT SPECIFICATION

(11) **EP 2 762 221 B1**
(45) Date of publication and mention of the grant of the patent: **11.04.2018**
(21) Application number: 11873165.2
(22) Date of filing: 28.12.2011
(51) Int. Cl.: B01D 53/80, B01D 53/50

(54) **DUAL-CHAMBER MULTI-ABSORPTION WET FLUE DESULFURIZATION DEVICE**
MULTIABSORPTIONS-NASSRAUCHGASENTSCHWEFELUNGSVORRICHTUNG MIT ZWEI KAMMERN
DISPOSITIF DE DÉSULFURISATION DE GAZ DE COMBUSTION HUMIDE À MULTI-ABSORPTION ET À CHAMBRE DOUBLE

(30) Priority: 28.09.2011 CN 201110298082
(43) Date of publication of application: 06.08.2014
(73) Proprietor: South China University of Technology, Guangdong 510640 (CN)
(72) Inventor: LIU, Dingping, Guangzhou City Guangdong Province 510640 (CN); YU, Hailong, Guangzhou City Guangdong Province 510640 (CN); LIU, Chang, Guangzhou City Guangdong Province 510640 (CN)
(74) Representative: Wendels, Stefan
(86) International application number: PCT/CN2011/084778
(87) International publication number: WO 2013/044563

(56) References cited:
- EP-A1- 0 882 487
- CN-U- 201 445 907
- CN-U- 201 510 842
- CN-Y- 201 085 986
- US-A- 5 840 263
- US-A- 6 001 321
- US-B1- 6 203 598

## Description

### FIELD OF THE INVENTION

The present invention relates to the field of large-scale flue gas desulfurization, specifically to a dual-chamber multi-absorption wet flue gas desulfurization device.

### BACKGROUND OF THE INVENTION

SO₂ pollution, as a major problem of atmospheric pollution in our country, is an important environmental factor restricting the coordinated and stable economic development of our country. The SO₂ source in the atmosphere of our country is mainly from the coal combustion, having an emission more than 90% of the total emission, thereby resulting in an expanding acid rain area in our country. So far, researchers of various countries have studied and developed many SO₂ control technologies, wherein the lime/limestone-gypsum wet flue gas desulfurization technology is the most mature technology. This method, having many using performances, stable operation, and high desulfurization efficiency, has been widely accepted and applied to all industries. However, it also has some defects, mainly including higher investment costs, a great liquid-gas ratio during running, and large consumption of water and electricity.

According to analysis of the wet flue gas desulfurization technology of a thermal power plant, the main reaction of this process is carried out in an absorption tower, wherein the desulfurizer, i.e. the limestone slurry, fed into the absorption tower gets in contact and mixed with the flue gas that is cooled by GGH before entering the absorption tower, with SO₂ in the flue gas chemically reacting with CaCO₃ in the desulfurizer slurry and O₂ in the air blown therein to produce gypsum (CaSO₄•2H₂O); the desulfurized flue gas, after successive droplet removal by a defogger and heating up by GGH, is discharged into the atmosphere via a chimney.

The core of the wet desulfurization process is the absorption tower, whose layout is divided according to specific functions into an absorption zone, a desulfurization product oxidation zone and a defogging zone. SO₂ in the flue gas is in contact with the absorbing liquid in the absorption zone and absorbed; the defogging zone separates the flue gas from droplets; the calcium sulfite product produced after the SO₂ absorption is further oxidized into calcium sulfate in the oxidation zone by the air blown into the tower. Different reaction tower has different design of the absorption zone, and achieves different desulfurization effects. The absorption zone of the prior art reaction tower usually has such layouts as slurry sprayed from the upper portion, a grid arranged inside the tower, a tray arranged inside the tower, jet bubbling or a liquid column sprayed at the bottom, wherein the spray desulfurization absorption tower is widely used because its technology is mature and it is not easy to be blocked.

In the spray process, however, in order to achieve the high desulfurization efficiency, on the one hand a large-capacity absorption tower has to be built to ensure that the flue gas has sufficient residence and reaction time in the tower, and on the other hand multiple large slurry circulating pumps and multiple mechanical nozzles have to be provided. Because the particle size of the atomized desulfurizer by mechanical atomization is generally 1000-3000 µm, multiple spray layers and nozzles have to be arranged, and the desulfurizer is circularly sprayed multiple times by a slurry circulating pump, resulting in high energy consumption of desulfurization.

Documents US 5840263 A, CN 201510842 U, EP 0882487 A1 and US 6001321 A all disclose a a dual-chamber multi-absorption wet flue gas desulfurization device.

### CONTENTS OF THE INVENTION

In order to overcome defects and shortcomings of the prior art, the present invention provides a dual-chamber multi-absorption wet flue gas desulfurization device that, under the premise of not reducing the desulfurization efficiency, can reduce the number and output of the slurry circulating pump, increase the flow rate of the flue gas, reduce the volume of the desulfurization tower, and increase the residence and reaction time of the flue gas.

**The present invention is realized through the following technical solution:**
A dual-chamber multi-absorption wet flue gas desulfurization device according to claim 1, comprising: a slurry pool, and an atomization absorption chamber above and in communication with the slurry pool, the atomization absorption chamber including a first atomization absorption chamber and a second atomization absorption chamber having an internal cavity larger than that of the first absorption chamber, the upper space of the slurry pool constituting a flue gas transition channel of the first atomization absorption chamber and the second atomization absorption chamber, the first atomization absorption chamber being provided at its top with a flue gas inlet, the second atomization absorption chamber being provided at its top with a flue gas outlet.

The slurry pool further includes an oxidation air inlet, a desulfurization slurry inlet and an oxidation product outlet; the oxidation air inlet and the desulfurization slurry inlet are arranged on the side wall of the slurry pool at the lower end of the first atomization absorption chamber; the oxidation product outlet is arranged on the side wall of the slurry pool at the lower end of the second atomization absorption chamber.

The first atomization absorption chamber is provided inside with a first atomization spray layer using ultrasonic atomizing nozzles which can spray upward or downward; the first atomization spray layer uses a nozzle for atomizing particles having a particle size less than 300 µm.

The second atomization absorption chamber is provided inside with a second atomization spray layer using a two-way conventional mechanical atomizing nozzles spraying upward or downward and is provided inside with a defogger and with the flue gas outlet.

A guide plate with an adjustable angle at the bottom of the second atomizing chamber is arranged between the second atomization spray layer and the flue gas transition channel of the slurry pool.

The first atomization spray layer and the second atomization spray layer are connected with the slurry spray system.

The slurry pool is provided with a slurry stirrer.

The oxidation air inlet is connected with an oxidation system, the desulfurization slurry inlet is connected with a slurry replenishment system, and the oxidation product outlet is connected with an oxidation product separation system.

### The present invention has the following beneficial effects:

1. The desulfurization absorption reaction can be realized three times through the first atomization absorption chamber, the second atomization absorption chamber and the flue gas transition channel;
2. in the presence of the first atomization absorption chamber, the specific surface area of the absorbent in contact with the flue gas is increased, the chemical reaction rate is raised, and the time needed for the flue gas to react in the tower can be reduced, thus reducing the height of the lower absorption tower;
3. when the mixed airflow formed by the flue gas and the particles having a particle size less than 300 µm after atomization flows through the flue gas transition channel, the gas turbulence is enhanced, which on the one hand extends the liquid-gas contact duration, and on the other hand enhances sedimentation of the product, further increasing the area at which the absorption reaction occurs with the slurry pool liquid surface, then improving the desulfurization, efficiency;
4. the second atomization absorption chamber is provided at its bottom with an adjustable guide plate, which can make the flue gas distributed evenly, improve the flow and reaction force field, reduce dead space of the atomization absorption chamber, and enlarge the effective space of the absorption chamber;
5. the second atomization absorption chamber has multiple functions of spray absorption, catching ultrafine particles and lowering fog;
6. this patent, having a simple structure, a low height, a small number of nozzles, low requirement of the power of the slurry circulating pump and a greatly reduced number of the slurry cycles, is characterized by saved investment, high desulfurization efficiency and low energy consumption; thus the technical means of this patent is simple and has an aggressive technical effect.

### BRIEF DESCRIPTIONS OF THE DRAWINGS

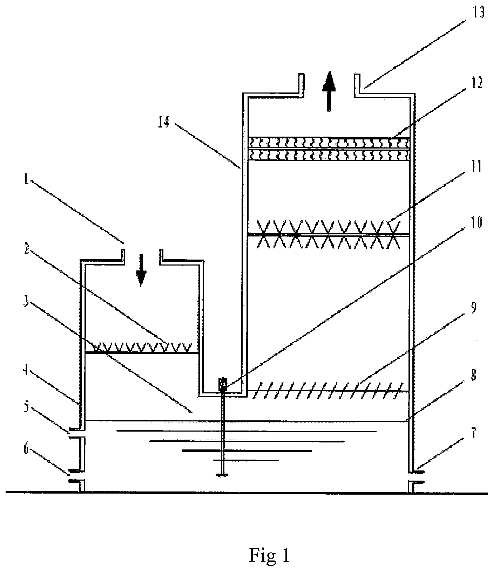

Fig. 1 is a schematic view of the structure of the present invention.

### DETAILED DESCRIPTION OF THE EMBODIMENTS

The specific embodiments of the present invention will be further described below with reference to drawings; however, the embodiments of the present invention are not limited thereto.

As shown in Fig. 1, a dual-chamber multi-absorption wet flue gas desulfurization device of the present invention comprises: a slurry pool 8, and an atomization absorption chamber above and in communication with the slurry pool 8, the atomization absorption chamber including a first atomization absorption chamber 4 and a second atomization absorption chamber 14 having an internal cavity larger than that of the first absorption chamber 4, the upper space of the slurry pool 8 constituting a flue gas transition channel 3 of the first atomization absorption chamber 4 and the second atomization absorption chamber 14, the first atomization absorption chamber 4 being provided at its top with a flue gas inlet 1, the second atomization absorption chamber 14 being provided at its top with a flue gas outlet 13. The slurry pool is provided with a slurry stirrer 10. The first atomization spray layer 2 and the second atomization spray layer 11 are connected with the slurry spray system. The spray system is in communication with the slurry pool 8, which accommodates the desulfurizer.

The slurry pool 8 further includes an oxidation air inlet 5, a desulfurization slurry inlet 6 and an oxidation product outlet 7; the oxidation air inlet 5 and the desulfurization slurry inlet 6 are arranged on the side wall of the slurry pool 8 at the lower end of the first atomization absorption chamber 4; the oxidation product outlet 7 is arranged on the side wall of the slurry pool 8 at the lower end of the second atomization absorption chamber 14. The oxidation air inlet 5 is connected with an oxidation system, the desulfurization, slurry inlet 6 is connected with a slurry replenishment system, and the oxidation product outlet 7 is connected with an oxidation product separation system.

The first atomization absorption chamber 4 is provided inside with a first atomization spray layer 2, which can spray upward or downward; the first atomization spray layer 2 uses an ultrasonic atomizing nozzle, which sprays particles having a particle size less than 300 µm.

The second atomization absorption chamber 14 is provided inside with a second atomization spray layer 11 that, together with the flue gas outlet 13, is provided with a defogger 12. A guide plate 9 is arranged between the second atomization spray layer 11 and the flue gas transition channel 3 of the slurry pool 8.

The present invention has the following working process: The flue gas enters the first atomization absorption chamber 4 through the flue gas inlet 1, the first atomization absorption chamber 4 being provided inside with a first atomization spray layer 2 that is provided with the ultrasonic atomizing nozzle (for spraying the desulfurizer) spraying upward (or downward). The flue gas reacts in the first atomization absorption chamber 4 with the atomized desulfurizer flowing upstream, allowing the first desulfurization absorption here.

The flue gas, after the first desulfurization in the first atomization absorption chamber 4, goes through the flue gas transition channel 3 between the two chambers (the first atomization absorption chamber 4 and the second atomization absorption chamber 14) above the slurry pool (liquid surface of the slurry) and enhances disturbance, which on the one hand extends the liquid-gas contact duration, and on the other hand enhances sedimentation of the product, further increasing the area at which the absorption reaction occurs with the slurry surface inside the slurry pool. The flue gas, after completing the second desulfurization inside the flue gas transition channel 3, arrives at the bottom of the second atomization absorption chamber 14.

The flue gas, after flowing over the guide plate 9 with an adjustable angle at the bottom of the second atomization absorption chamber 14, flows evenly upward and gets in adequate contact with the desulfurizer ejected by the second atomization spray layer 11, with the second atomization absorption chamber 14 being provided up and down with two-way (upward or downward) conventional mechanical atomizing nozzles. The flue gas, under the rinsing action of the second atomization absorption chamber 14, on the one hand is desulfurized again, and on the other hand allows the ultrafine droplets having a particle size less than 300 µm to be caught partially that are carried in the flue gas because of the first atomization.

The flue gas, after going through the triple desulfurization, arrives at the defogging zone at the top of the second atomization absorption chamber 14, with a defogger 12 arranged in the defogging zone. Finally the clean flue gas leaves the desulfurization tower (i.e. the second atomization absorption chamber 14) via the flue gas outlet 13. In order to prevent the defogger 12 from being blocked, it is provided up and down with high-pressure rinse water, respectively, which is supplied through a high-pressure water pump.

A slurry stirrer 10 is used for stirring and oxidizing. With the slurry in the slurry pool 8 continuously replenished via a desulfurizer inlet 6, its desulfurization product reacts with the air entering via the oxidation air inlet 5 to produce the desulfurized product oxide, which is finally discharged via the oxidation product outlet 7 of the slurry pool 8, thus completing the entire desulfurization process.

## Claims

1. A dual-chamber multi-absorption wet flue gas desulfurization device comprising: a slurry pool, and an atomization absorption chamber above and in communication with the slurry pool, **characterized in that** the atomization absorption chamber includes a first atomization absorption chamber and a second atomization absorption chamber having an internal cavity larger than that of the first absorption chamber, an upper space of the slurry pool constituting a flue gas transition channel of the first atomization absorption chamber and the second atomization absorption chamber, the first atomization absorption chamber being provided at its top with a flue gas inlet, the second atomization absorption chamber being provided at its top with a flue gas outlet;
wherein the first atomization absorption chamber is provided inside with a first atomization spray layer using ultrasonic atomizing nozzles, which can spray upward or downward; the particles sprayed by the first atomization spray layer have a particle size less than 300 µm; and the second atomization absorption chamber is provided inside with a second atomization spray layer using a two-way conventional mechanical atomizing nozzles spraying upward or downward; and
a guide plate is arranged with an adjustable angle at the bottom of the second atomizing chamber,
and the slurry pool further includes an oxidation air inlet arranged on a side wall of the slurry pool at a lower end of the first atomization absorption chamber.

2. The dual-chamber multi-absorption wet flue gas desulfurization, device according to claim 1, **characterized in that** the slurry pool further includes a desulfurization slurry inlet and an oxidation product outlet; the desulfurization slurry inlet are arranged on a side wall of the slurry pool at a lower end of the first atomization absorption chamber; the oxidation product outlet is arranged on a side wall of the slurry pool at a lower end of the second atomization absorption chamber.

3. The dual-chamber multi-absorption wet flue gas desulfurization device according to claim 1, **characterized in that** the second atomization absorption chamber is provided inside with a defogger and with the flue gas outlet.

4. The dual-chamber multi-absorption wet flue gas desulfurization device according to claim 1, **characterized in that** the first atomization spray layer and the second atomization spray layer are connected with the slurry spray system.

5. The dual-chamber multi-absorption wet flue gas desulfurization device according to claim 1, **characterized in that** the slurry pool is provided with a slurry stirrer.

6. The dual-chamber multi-absorption wet flue gas desulfurization device according to claim 5, **characterized in that** the oxidation air inlet is connected with an oxidation system, the desulfurization slurry inlet is connected with a slurry replenishment system, and the oxidation product outlet is connected with an oxidation product separation system.

## Patentansprüche

1. Eine Doppelkammer-Multiabsorptions-Nassrauchgasentschwefelungsvorrichtung umfassend:
einen Schlammpool, und eine Atomisierungs-Absorptions-Kammer über und in Kommunikation mit dem Schlammpool, **dadurch gekennzeichnet, dass** die Atomisierungs-Absorptions-Kammer eine erste Atomisierungs-Absorptions-Kammer und eine zweite Atomisierungs-Absorptions-Kammer mit einem Innenhohlraum größer als der der ersten Absorptions-Kammer, einen oberen Raum des Schammpools, der einen Rauchgas-Übergangskanal der ersten Atomisierungs-Absorptions-Kammer und der zweiten Atomisierungs Absorptions-Kammer ausbildet, die erste Atomisierungs-Absorptions-Kammer, die an ihrer Oberseite über einen Rauchgaseinlass verfügt, die zweite Atomisierungs-Absorptions-Kammer, die an ihrer Oberseite über einen Rauchgasauslass verfügt, umfasst;
wobei die erste Atomisierungs-Absorptions-Kammer innen über eine erste Atomisierungs-Sprüh-Schicht verfügt, die Ultraschall-Atomisierungs-Düsen benutzt, die aufwärts oder abwärts sprühen können; die von der ersten Atomisierungs-Sprüh-Schicht gesprühten Teilchen weisen eine Teilchengröße kleiner als 300 µm auf; und die zweite Atomisierungs-Absorptions-Kammer innen über eine zweite Atomisierungs-Sprüh-Schicht verfügt, die eine konventionelle, mechanische Zwei-Wege-Atomisierungs-Düse nutzt, die aufwärts oder abwärts sprüht; und
eine Führungsplatte mit einem einstellbaren Winkel an dem Boden der zweiten Atomisierungs-Kammer angeordnet ist,
und der Schlammpool ferner einen Oxidationslufteinlass umfasst, der an einer Seitenwand des Schlammpools an einem unteren Ende der ersten Atomisierungs-Absorptions-Kammer angeordnet ist.

2. Die Doppelkammer-Multiabsorptions-Nassrauchgasentschwefelungsvorrichtung gemäß Anspruch 1, **dadurch gekennzeichnet, dass** der Schlammpool ferner einen Entschwefelungsschlammeinlass und einen Oxidationsproduktauslass umfasst; der Entschwefelungseinlass sind an einer Seitenwand des Schlammpools an einem unteren Ende der ersten Atomisierungs-Absorptions-Kammer angeordnet; der Oxidationsproduktauslass ist an einer Seitenwand des Schlammpools an einem unteren Ende der zweiten Atomisierungs-Absorptions-Kammer angeordnet.

3. Die Doppelkammer-Multiabsorptions-Nassrauchgasentschwefelungsvorrichtung gemäß Anspruch 1, **dadurch gekennzeichnet, dass** die zweite Atomisierungs-Absorptions-Kammer angeordnet innen über einen Entnebeler und über dem Rauchgasauslass verfügt.

4. Die Doppelkammer-Multiabsorptions-Nassrauchgasentschwefelungsvorrichtung gemäß Anspruch 1, **dadurch gekennzeichnet, dass** die erste Atomisierungs-Sprüh-Schicht und die zweite Atomisierungs-Sprüh-Schicht mit dem Schlammsprühsystem verbunden sind.

5. Die Doppelkammer-Multiabsorptions-Nassrauchgasentschwefelungsvorrichtung gemäß Anspruch 1, **dadurch gekennzeichnet, dass** der Schlammpool über einen Schlammrührer verfügt.

6. Die Doppelkammer-Multiabsorptions-Nassrauchgasentschwefelungsvorrichtung gemäß Anspruch 5, **dadurch gekennzeichnet, dass** der Oxidationslufteinlass mit einem Oxidationssystem verbunden ist, der Entschwefelungsschlammeinlass mit einem Schlammnachfüllsystem verbunden ist, und der Oxidationsproduktauslass mit einem Oxidationsprodukttrennungssystem verbunden ist.

## Revendications

1. Dispositif de désulfuration de fumées humides à absorption multiple à double chambre comprenant: une piscine à boues et une chambre d'absorption d'atomisation au-dessus et en communication avec la piscine à boues,
**caractérisée en ce que** la chambre d'absorption d'atomisation comprend une première chambre d'absorption d'atomisation et une seconde chambre d'absorption d'atomisation ayant une cavité interne supérieure à celle de la première chambre d'absorption, un espace supérieur de la piscine de boue constituant un canal de transition de gaz de combustion de la première chambre d'absorption d'atomisation et de la seconde chambre d'absorption d'atomisation avec une entrée de gaz de combustion, la deuxième chambre d'absorption d'atomisation étant munie à sa partie supérieure d'une sortie de gaz de combustion;
dans lequel la première chambre d'absorption d'atomisation est pourvue à l'intérieur d'une première couche de pulvérisation d'atomisation utilisant des buses d'atomisation à ultrasons, qui peuvent pulvériser vers le haut ou vers le bas; les particules pulvérisées par la première couche de pulvérisation d'atomisation ont une taille de particules inférieure à 300 µm; et la seconde chambre d'absorption d'atomisation est munie à l'intérieur d'une seconde couche de pulvérisation d'atomisation utilisant des buses d'atomisation mécaniques classiques à deux voies pulvérisant vers le haut ou vers le bas; et une plaque de guidage est agencée avec un angle réglable au fond de la seconde chambre d'atomisation,
et le bain de bouillie comprend en outre une entrée d'air d'oxydation agencée sur une paroi latérale de la piscine de bouillie à une extrémité inférieure de la première chambre d'absorption d'atomisation.

2. Dispositif de désulfuration de fumées humides à absorption multiple à deux chambres selon la revendication 1, **caractérisé en ce que** la piscine à boues comprend en outre une entrée de boue de désulfuration et une sortie de produit d'oxydation; l'entrée de boue de désulfuration est disposée sur une paroi latérale de la piscine de boue à une extrémité inférieure de la première chambre d'absorption d'atomisation; la sortie du produit d'oxydation est agencée sur une paroi latérale de la piscine de bouillie à une extrémité inférieure de la seconde chambre d'absorption par atomisation.

3. Dispositif de désulfuration de fumées humides multi-chambres à double chambre selon la revendication 1, **caractérisé en ce que** la seconde chambre d'absorption d'atomisation est pourvue à l'intérieur d'un désembueur et de la sortie des fumées.

4. Dispositif de désulfuration de fumées humides à absorption multiple à double chambre selon la revendication 1, **caractérisé en ce que** la première couche de pulvérisation d'atomisation et la seconde couche de pulvérisation d'atomisation sont reliées au système de pulvérisation de boue.

5. Dispositif de désulfuration de fumées humides à absorption multiple à double chambre selon la revendication 1, **caractérisé en ce que** la piscine à boues est pourvue d'un agitateur à bouillie.

6. Dispositif de désulfuration de fumées humides à double chambre multi-absorption selon la revendication 5, **caractérisé en ce que** l'entrée d'air d'oxydation est reliée à un système d'oxydation, l'entrée de boue de désulfuration est reliée à un système de réapprovisionnement en boue est relié à un système de séparation de produit d'oxydation.
